# EUROPEAN PATENT SPECIFICATION

(11) **EP 2 703 858 B1**
(45) Date of publication and mention of the grant of the patent: **01.02.2017**
(21) Application number: 12006205.4
(22) Date of filing: 31.08.2012
(51) Int. Cl.: G02B 6/30

(54) **High-efficient CMOS-compatible grating couplers with backside metal mirror**
Hocheffiziente CMOS-kompatible Gitterkoppler mit rückseitigem Metallspiegel
Coupleurs à réseau à haute efficacité avec miroir métallique arrière compatibles avec fabriquation CMOS

(43) Date of publication of application: 05.03.2014
(73) Proprietor: Universität Stuttgart, 70174 Stuttgart (DE); Institut Für Mikroelektronik Stuttgart, 70569 Stuttgart (DE)
(72) Inventor: Sfar Zaoui, Wissem, 70569 Stuttgart (DE); Berroth, Manfred, 71063 Sindelfingen (DE); Butschke, Jörg, 70327 Stuttgart (DE); Letzkus, Florian, 72144 Dusslingen (DE)
(74) Representative: Mergel, Volker

(56) References cited:
- US-A1- 2010 059 822
- US-A1- 2010 111 473
- SYCHUGOV V A ET AL: "OPTIMIZATION AND CONTROL OF GRATING COUPLING TO OR FROM A SILICON-BASED OPTICAL WAVEGUIDE", OPTICAL ENGINEERING, SOC. OF PHOTO-OPTICAL INSTRUMENTATION ENGINEERS, BELLINGHAM, vol. 35, no. 11, 1 November 1996 (1996-11-01), pages 3092-3099, XP000638603, ISSN: 0091-3286, DOI: 10.1117/1.601048
- TAILLAERT ET AL.: OPT. LETT., vol. 29, no. 23, 2004, pages 2749-2751, XP002690979,

## Description

### Field of the Invention

The invention generally relates to grating couplers for coupling optical fibers to semiconductor photonic integrated circuits, in particular for coupling single-mode fibers to rectangular waveguides, based on semiconductor-on-insulator technology. More specifically, the invention relates to photonic integrated circuits including such grating couplers, a wafer with a plurality of such photonic integrated circuits and a method of production of such grating couplers on a semiconductor-on-insulator wafer.

### Background of the Invention

In silicon-on-insulator (SOI) technology there is a large dimensional mismatch between a standard single mode optical fiber core and the integrated nanophotonic waveguides on the SOI wafer. To ensure single mode condition, the integrated SOI waveguides typically have a cross section as small as 500 nm x 250 nm, defining the entrance area of the integrated waveguide, whereas the core of a single-mode fiber (SMF) has a typical diameter of about 10 µm. This dimensional mismatch results in a large mode mismatch between the single-mode fiber and the integrated waveguide, which in turn, causes high coupling losses between the silicon photonic integrated circuits (SiPIC) and the outside world. Therefore, coupling light between the single-mode fiber and the integrated waveguide is generally difficult.

However, the SOI platform has become unforfeitable for designing optoelectronic devices owing to the high integration possibility driven by the large refractive index difference between silicon (Si) and silicon dioxide (SiO₂) and the complementary metal-oxide-semiconductor (CMOS) compatibility, offering compactness and cost effectiveness in the puzzle elements of optical communication networks for bit rates of 100 Gbit/s and beyond.

One way to ensure good broadband coupling efficiency between single mode fibers and silicon photonic integrated circuits has been presented in the last years using Bragg structures called grating couplers (see e.g. Taillaert et al. in Opt. Lett. Vol. 29, No. 23, 2749-2751, 2004). In addition to acceptable alignment tolerance, these elements allow simple vertical on-wafer characterization instead of complicated butt-coupling and additional cleaving steps. They can be realized as one or two-dimensional structures and can serve to couple one or both orthogonal polarization states, acting as polarization beam splitters.

However, such grating couplers being structured in the front silicon-on-insulator layer of a SOI-wafer typically achieve a coupling efficiency of only about 30% (about -5 dB) at the typical telecommunications wavelength of 1550 nm (see Taillaert et al. in "Grating Couplers for Coupling between Optical Fibers and Nanophotonic Waveguides", Japanese Journal of Applied Physics, Vol. 45, No. 8A, 2006, pp. 6071-6077). Therefore, it is still desirable to improve the coupling efficiency.

It has been proposed to enhance the coupling efficiency by redirecting the diffracted power toward the substrate back to the silicon waveguide. In "Compact and Highly Efficient Grating Couplers Between Optical Fiber and Nanophotonic Waveguides" by Van Laere et al. in Journal of Lightwave Technology, Vol. 25, No. 1, 2007 it has been discussed to add a gold bottom mirror to the grating couplers achieving a coupling efficiency of 69%. However, with this method the gratings are structured on the SOI-wafer and afterwards an adequate polymer and a gold layer are deposited, and then the thick silicon substrate is removed, so that the buried oxide (BOX) becomes the top cladding. Finally, the wafer is bonded with another host wafer, and hence the fabrication process cannot be transferred to a standard CMOS line.

Disadvantageously, this method requires such additional wafer bonding process and providing a buffer layer after the grating couplers are structured. Therefore, providing a gold mirror according to this method requires many extensive process steps. Furthermore, it is particularly disadvantageous, that this method is not CMOS compatible.

Selvaraja et al. describe in "Highly efficient grating coupler between optical fiber and silicon photonic circuit", Conference on Lasers and Electro-Optics / International Quantum Electronics Conference, paper CTuC6 (2009) to reflect the downwards radiating light by using a stack of amorphous Si/SiO₂ forming a distributed Bragg reflector (DBR). The temperature of each fabrication step was kept under 450°C to make the process CMOS back-end compatible. A coupling efficiency of 69.5% is reported to be achieved. However, disadvantageously this method requires at least two sequences, where each sequence is composed of Si and SiO₂ layers with exact dimensions of a quarter wavelength each.

Recently it has been proposed to use a silicon overlay that makes the structure "intrinsically" directional without need of reflecting back downward optical power (see D. Vermeulen et al., Opt. Exp. Vol. 18, No. 17, 18278-18283, 2010). However, therein an additional layer and multiple thickness levels need to be introduced.

US-A1-2010/0059822 furthermore discloses various methods for manufacturing photonic elements, like grating couplers and photonic integrated circuits, within a silicon-on-insulator wafer.

Disadvantageously, all described methods are technologically complex and at least partially not CMOS compatible.

### Summary of the Invention

Therefore, it is an object of the present invention to provide grating couplers which have a high coupling efficiency and a method of production of such high efficient grating couplers which are technologically simple and cost efficient.

A further object of the present invention is to provide a method of production of such high efficient grating couplers which is CMOS compatible and can be performed in a standard CMOS line.

A more specific aspect of the object of the present invention is to provide a method of production of such high efficient grating couplers which does not require an additional wafer bonding process after the semiconductor-on-insulator layer has been structured.

The object of the invention is achieved by subject matter of the independent claims. Preferred embodiments of the invention are subject of the dependent claims.

According to the invention, grating couplers for coupling optical fibers to semiconductor photonic integrated circuits on semiconductor-on-insulator chips are produced. The invention uses a semiconductor-on-insulator wafer, comprising a substrate, preferably a semiconductor substrate, a semiconductor-on-insulator layer forming an optical waveguide layer, and an insulator layer being positioned between the substrate and the semiconductor-on-insulator layer. For the purpose of reference and explanation a front and back side of the wafer is defined, namely such that the semiconductor-on-insulator layer is closer to the front side and the substrate is closer to the back side. So the layer sequence seen from the back to the front side as follows is:
- substrate
- insulator layer
- semiconductor-on-insulator layer

Preferably, a standard silicon-on-insulator (SOI) wafer comprising a silicon substrate is used, wherein said insulator layer is a thin SiO₂-layer in particular a buried oxide (BOX) layer deposited in the silicon substrate from the front side. The silicon-on-insulator layer is on the front side of the BOX layer. The SOI-wafer is chosen with a predetermined thickness of the SiO₂-layer which provides constructive interference of the guided light at the desired wavelengths, which is preferably about the typical telecommunications wavelength of 1550 nm.

In a first structuring step the coupler grating structures are lithographically defined and transferred into the front semiconductor-on-insulator layer, preferably using a positive tone photoresist and preferably using a dry etching process without etch stop until a predetermined depth is reached. The etch depth is smaller than the thickness of the semiconductor-on-insulator layer, such that a closed semiconductor-on-insulator layer remains between the insulator layer and the coupler grating structures. In other words the etching process is stopped when a predetermined depth is reached, which is still within the semiconductor-on-insulator layer, before reaching the insulator layer so that the coupler grating structures mainly do not extend to the insulator layer. This can be achieved e.g. by a time controlled etching process, preferably a time controlled dry etching process, from the front side.

In a second structuring step integrated optical waveguides are structured in the semiconductor-on-insulator layer, wherein the integrated optical waveguide structures are optically connected to the coupler grating structures for guiding light between the coupler grating structures and the integrated optical waveguide structures. The integrated optical waveguide structures are sometimes referred to as integrated waveguides or nanophotonic waveguides.

Said lithographically defining and etching of the integrated optical waveguide structures is preferably performed separately from and after said lithographically defining and etching of the coupler grating structures. The integrated optical waveguide structures are preferably planar waveguide structures, e.g. linear rectangular waveguides, sometimes also called photonic wires. The integrated optical waveguide structures are preferably defined by a lithographic process from the front side of the wafer using a negative tone photoresist and dry etching process to transfer the waveguide structures into the semiconductor-on-insulator or silicon-on-insulator layer.

In the step of structuring the integrated optical waveguide structures in the semiconductor-on-insulator layer, the insulator layer - that is the SiO₂ (buried oxide) layer of the SOI-wafer - acts as an etch stop when etching the integrated optical waveguide structures from the front side of the semiconductor-on-insulator wafer, such that this etching process stops when said insulator layer is reached. In other words, the semiconductor-on-insulator layer is completely removed in the areas exposed by the integrated waveguide etch mask.

Preferably a passivation layer is deposited on the front side of said semiconductor-on-insulator wafer after the high-index optical structures (coupler grating structures and integrated optical waveguide structures) are etched. That is, the passivation layer covers at least the coupler grating structures and the integrated optical waveguide structures. By suitably selecting material and deposition process, the passivation layer can be used to control the mechanical tension of the whole system. The passivation layer remains on the wafer and on the finally produced integrated photonic circuit chips cut from the wafer. The passivation layer serves as front side cladding layer opposite to the insulator layer which serves as back side cladding layer, i.e. the semiconductor-on-insulator layer is directly sandwiched between the insulator layer and the passivation layer also in the finally produced integrated photonic circuit chips cut from the wafer.

In a further step after providing the optical structures in the waveguiding front silicon-on-insulator layer or film, i.e. after structuring the coupler grating structures and the integrated optical waveguide structures therein and after the passivation step, the semiconductor-on-insulator wafer is thinned to membrane thickness at least in the areas opposite to the coupler grating structures. In this step, the semiconductor-on-insulator wafer is thinned from the back side up to the insulator layer at least in areas opposite to the coupler grating structures. That is, at least in the areas opposite to the coupler grating structures, the semiconductor substrate material is completely removed until the back side of the insulator layer is exposed.

Preferably, membrane windows are etched into the semiconductor substrate extending from the back side until the insulator layer is exposed in said membrane windows. In other words, the semiconductor-on-insulator wafer is thinned only in localized areas opposite to the coupler grating structures to produce said back side membrane windows, but still maintains stability of the substrate.

For forming said localized membrane windows from the back side of the semiconductor-on-insulator wafer an auxiliary layer in the form of a further structured etch mask is provided on the back side of the semiconductor substrate. In the step of etching the back side membrane windows the insulator layer, in particular the SiO₂-buried oxide layer, acts as etch stop, such that this etching process stops when the insulator layer is reached. Therewith, no holes extending through the insulator layer are etched and the insulator layer remains completely closed, separating said back side membrane windows from said coupler grating structures. In other words, the membrane windows are in the form of one side open recesses or cavities in the semiconductor substrate, being open to the back side and being delimited to the front side.

After etching the membrane windows from the back side into the semiconductor substrate a mirror layer is deposited from the back side in the thinned areas, i.e. in the membrane windows opposite to the coupler grating structures. The mirror layer is deposited on the back side of the exposed insulator layer within the cavities being defined by the membrane windows, the cavities being open to the back side and limited by the insulator layer to the front side. Therewith, the insulator layer which forms the back side cladding layer of the coupler grating structures and the integrated waveguides is coated with a mirror layer on its back side within each membrane window, therewith enhancing the coupling efficiency from the optical fibers through the grating couplers to the rectangular waveguides.

Preferably a metal layer is used as a perfect mirror layer. The mirror layer can be easily deposited e.g. by vapor deposition or sputtering on the back side of the insulator layer within the membrane windows. In particular, no additional wafer bonding is necessary to provide the mirror layer on the back side of the insulator layer.

Thus, efficient coupling is achieved by matching the diffracted field to the Gaussian mode profile of the single-mode fiber and by increasing the directionality, i.e. the ratio of the diffracted optical power from the fiber toward the integrated waveguide, or vice versa, to the total diffracted power. The first issue is achieved by adequate design of the gratings period, fill factor, etch depth and incident angle, the second issue is achieved by the use of the back side mirror.

An advantage of the present invention is that a technologically simple process which includes essentially only standard semiconductor production processes is used and, nevertheless, the coupling efficiency of the grating couplers can be significantly enhanced. Further advantageously, no additional bonding steps are required after the optical structures in the high-index silicon-on-insulator layer are produced.

A further advantage of the method according to the present invention is that it is Complementary-Metal-Oxide-Semiconductor (CMOS) compatible. The method steps can be performed in a standard CMOS line.

Summarizing, the invention provides a semiconductor-on-insulator wafer as specified in appended claim 11, wherein said insulator layer serves as a low-index cladding layer on the back side of said high-index coupler grating structure and said high-index integrated optical waveguide structure and wherein said insulator layer separates the coupler grating structure from said mirror layer within the back side open membrane window.

After the integrated photonic circuits have been established on the semiconductor-on-insulator wafer, the wafer is cut into a plurality of single integrated photonic circuit chips, such that each integrated photonic circuit chip comprises the features of appended claim 11, wherein said insulator layer serves as a cladding layer on the back side of said coupler grating structure and said integrated optical waveguide structure and wherein said insulator layer separates the coupler grating structure from said mirror layer in the membrane window.

The invention is described in more detail and in view of preferred embodiments hereinafter. Reference is made to the attached drawings wherein same and similar elements are partially denoted with the same reference signs. It will be appreciated that every feature described in description or the claims or shown in the figures may represent an essential feature of the present invention independently of other features, even if this feature is described together with other features of an embodiment.

### Brief Description of the Figures

It is shown in:
- Fig. 1: a front plane view on a SOI wafer with a plurality of photonic integrated circuits,
- Fig. 2a/b: steps 1 to 11 of a method according to one embodiment of present invention, wherein the left column shows a schematic cross section of one photonic integrated circuit of the wafer as shown in fig. 1 and the right column shows the corresponding top plan view on the front side,
- Fig. 3: a schematic representation of coupling of a single mode fiber core to grating couplers of one photonic integrated circuit in cross section and top plan view,
- Fig. 4: a perspective representation of a portion of the grating coupler and membrane window as being produced by steps 1 to 11,
- Fig. 5: a simulated coupling efficiency of the grating coupler according to the present invention versus the BOX-thickness at a wavelength of 1550 nm,
- Fig. 6: a microscopic picture of the fabricated structure composed of two grating couplers with backside mirrors and connected by a waveguide. The inset (a) shows a zoom-in of the coupler grating etched in the silicon-on-insulator layer. The inset (b) shows a front side view (left) and back side view (right) of the metal mirror,
- Fig. 7: a measured coupling efficiency of a grating coupler with a grating period of 600 nm, a fill factor of 0.5 with metal mirror at different incidence angles,
- Fig. 8: a measured coupling efficiency of the designed grating coupler with and without backside metal mirror.

### Detailed Description of the Invention

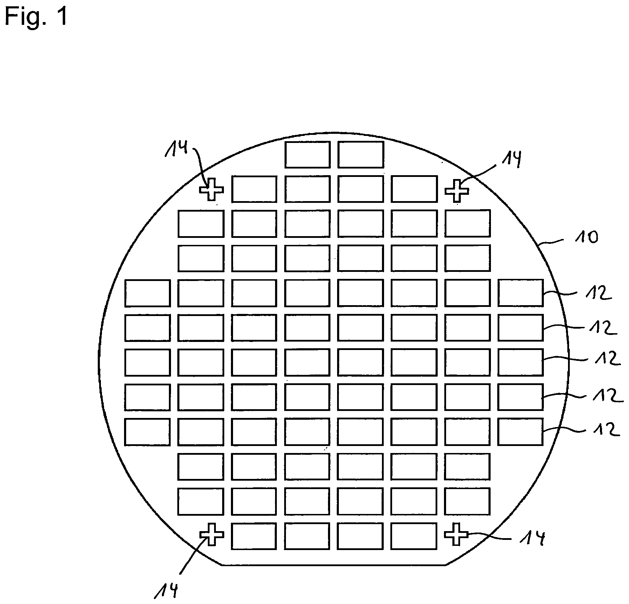

Referring to Fig. 1 a 150 mm diameter silicon-on-insulator (SOI) wafer 10 is used as base material for the process according to the exemplary embodiment described herein. A plurality of photonic integrated circuit chips 12 and some overlay or alignment marks 14 for adjustment are defined on the wafer.

The designed optical structures are fabricated according to the SOI wafer flow concept using standard technological processes. The SOI wafer flow concept is described in J. Butschke et al., Micro. Eng. 46, 473-476, 1999. See also F. Letzkus, "Membran- und Struktur-Atzprozesse für großflächige Projektionsmasken in der Nanolithografie", URL: http://elib.uni-stuttgart.de/opus/volltexte/2003/1438 and J. Butschke, "Die SOI Scheibe der Mikroelektronik als neue Prozessbasis für nanostrukturierte Silizium Membranmasken", URL: http://elib.uni-stuttgart.de/opus/volltexte/2003/1363. All three mentioned documents are incorporated herewith by reference.

The method steps according to the exemplary embodiment of the invention are described as follows, wherein the steps are performed in the described order.

### Step 1

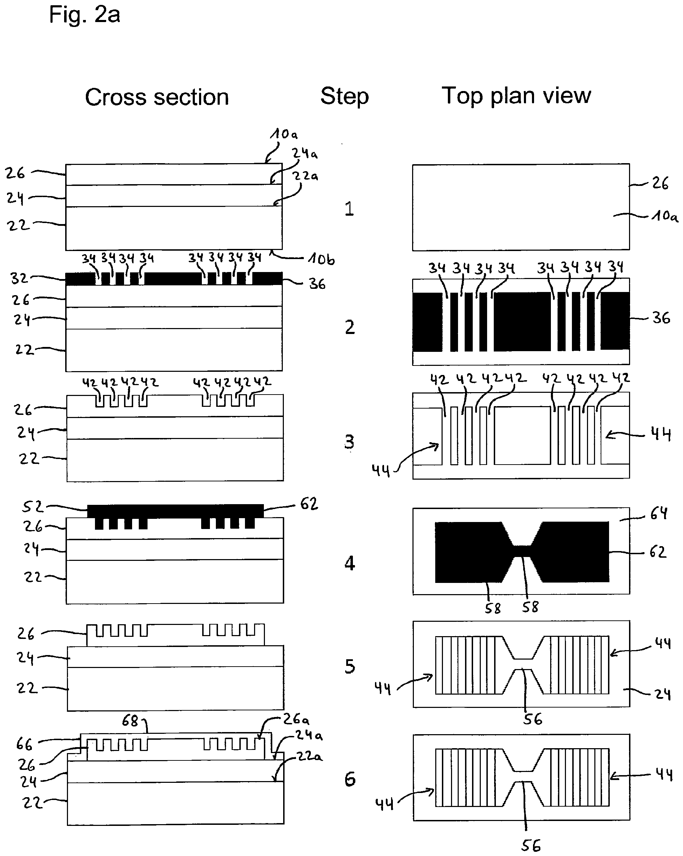

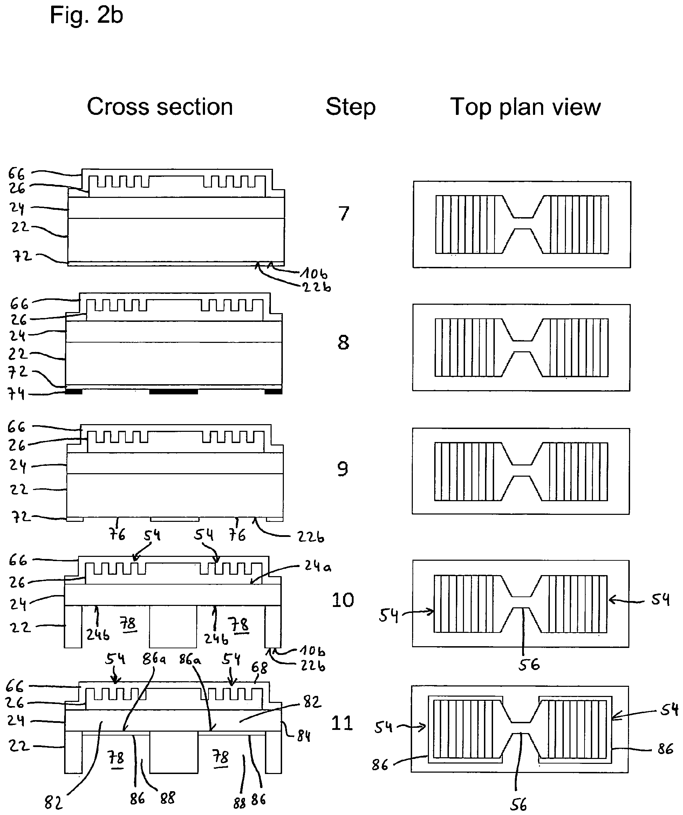

Referring to Fig. 2a/b, the wafer 10 has a front side 10a (upper side in Fig. 2a/b, left column) and a back side 10b (bottom side in Fig. 2a/b, left column). The silicon-on-insulator wafer comprises a silicon substrate 22 which has a buried oxide layer 24 on its front side 22a and a silicon-on-insulator layer 26 on the front side 24a of the buried oxide layer 24, such that the silicon-on-insulator layer 26 represents the front side of the wafer 10. At the typical wavelength of 1550 nm, the refractive index of the silicon-on-insulator layer acting as the high-index waveguiding layer is n=3.47, while the refractive index of the buried oxide layer 24 serving as a back side cladding layer is n=1.44. The thickness of the silicon-on-insulator layer 26 and the buried oxide (BOX) layer 24 are determined by the optical requirements like wavelength etc. of the application. In this example the silicon substrate 22 has a thickness of about 625 *µ*m, the semiconductor-on-insulator layer 26 has a thickness of 250 nm and the buried oxide layer 24 has a thickness of 3 *µ*m. The buried oxide layer 24 is later used as an etch stop for both, the front side etch of the integrated optical waveguide structures and the back side etch of the membrane windows.

### Step 2

The wafer 10 is coated using a HAMATECH coater with a positive tone photoresist 32, and the later recessed parts of the grating coupler structures are exposed. Exposure can be done either optically with a wafer stepper (e.g. Canon) or by the use of an electron beam writer (e.g. Vistec SB3050). During exposure, also alignment marks for the second layer become defined. Resist development (HAMATECH developer) is done using a TMAH based chemistry. The areas 34 exposed by the so provided first etch mask 36 define the grooves 42 of the coupler grating structures 44 to be etched in the following step 3.

### Step 3

Using a dry etch process (SPTS Pegasus), all open silicon area becomes recessed, thereby forming the grooves 42 of the coupler grating structures 44. The dry etch chemistry is SF6 and C4F8. The etch process of producing the coupler grating structures 44 is time controlled without an etch stop layer. The etch depth is determined by the optical requirements (wavelength etc.) of the application. In this example the etch depth is 70 nm, that is 28% of the thickness of the silicon-on-insulator layer 26. Generally, the etch depth is significantly less than 100% of the thickness of the silicon-on-insulator layer 26.

Afterwards the remaining resist 32 is striped in an O₂ plasma. The grating lines 34 of the coupler grating structures have now been produced.

Summarizing in this first lithography and etch process defined by steps 2 and 3 the silicon-on-insulator layer 26 is etched to produce the coupler grating structures 44.

### Step 4

The wafer 10 is coated with the HAMATECH coater again, now with a negative tone photoresist 52. Using the previously defined alignment structures (see step 2), the optical structures, i.e. the grating couplers 54 and the integrated optical waveguide structures 56 are exposed. Resist development (HAMATECH developer) is done using a TMAH based chemistry. The area 58 still covered by the so provided second etch mask 62 defines the contours of the grating couplers 54 and the integrated optical waveguide structures 56 in the silicon-on-insulator layer 26.

### Step 5

Using a dry etch process (SPTS Pegasus), the open silicon area 64 is etched down to the buried oxide layer 24 which acts as etch stop without any notching at the interface. The dry etch chemistry here is again is SF6 and C4F8. The remaining resist 52 is striped afterwards in an O₂ plasma.

Summarizing in this second lithography and etch process defined by steps 4 and 5 the definition of the integrated optical waveguide structures 56 is performed and the front silicon-on-insulator layer 26 is etched until the buried oxide layer 24 is reached.

### Step 6

Subsequent a plasma oxide passivation layer 66 (AMAT P5000) is deposited on the front side 10a of the wafer 10, more precisely directly on the front side 26a of the remaining silicon-on-insulator structured layer 26 and the front side 24a of the buried oxide layer 24 in the areas around the grating couplers 54 and around the integrated optical waveguide structures 56, where the buried oxide layer 24 is exposed. The passivation layer 66 is preferably a SiO₂ passivation layer. The passivation layer 66 forms a cladding layer on the front side of the previously produced optical structures 44, 56 in the semiconductor-on-insulator layer 26, i.e. on the front side of the coupler grating structures 44 and the integrated optical waveguide structures 56, i.e. serves as front side cladding 68 for the gratings and waveguides. The passivation layer 66 is not removed and remains on the front side 10a of the wafer 10 and the finally produced photonic integrated circuit chips. The thickness of the passivation layer 66 is determined by the optical application. The thickness of the passivation layer 66 is chosen here to be around 1 *µ*m.

### Step 7

An oxide hard mask layer 72 is deposited (AMAT P5000) on the wafer back side 10b, more precisely on the back side 22b of the substrate 22.

### Step 8

The hard mask 72 on the back side 10b of the wafer 10 is coated (HAMATECH coater) with a positive tone photoresist 74. Opposite to the coupler grating structures 44, membrane windows are exposed aligned to the front side alignment marks using a mask aligner (EVG). Resist development (HAMATECH developer) is done using a TMAH based chemistry.

### Step 9

The hard mask 72 is etched (AMAT Centura) with a dry etch process using a CHF3/CF4 etch chemistry. Afterwards, the remaining resist 74 is striped in an O₂ plasma.

### Step 10

Using a dry etch process (SPTS Pegasus), the open silicon areas 76 are completely etched through the substrate 22 from the back side 22b down to the buried oxide layer 24 without any notching at the interface 22/24. The buried oxide layer 24 acts as etch stop. The dry etch chemistry is SF6 and C4F8. Alternatively a wet etch process is possible to produce the membrane windows 78.

Summarizing, the wafer 10 is thinned from the back side 10b opposite to the grating couplers 54 to the insulator layer 24. Therewith, a SiO₂ or buried oxide membrane layer 24 is produced, which is exposed on the back side 24b and has the coupler grating structures 44 patterned in the waveguiding silicon-on-insulator layer 26 on its front side 24a.

Therewith, the buried oxide layer 24 has multiple functions:
i) The buried oxide layer 24 acts as thin membrane 82 carrying the coupler grating structures 44,
ii) the buried oxide layer 24 acts as etch stop layer and/or
iii) the buried oxide layer 24 acts as optical layer as back side cladding 84.

### Step 11

As a last step, a metal mirror 86, in this example an aluminum mirror layer, is sputter deposited (using a Leybold Z590 system) on the wafer membrane back side 10b, i.e. on the exposed back side 24b of the insulator layer 24 within the membrane windows 78 as produced in steps 8 to 10.

Summarizing, in steps 7 to 11, membrane windows 78 or "mirror windows" are defined on the wafer back side 10b and are etched until the buried oxide layer 24 is reached, so that an appropriate metal deposition (e.g. aluminum) can be provided in the membrane cavity 88. No wafer bonding process is required between providing the silicon-on-insulator wafer 10 (step 1) and depositing the mirror layer 86 (step 11).

After the final wafer-based step 11, the wafer 10 can be cut in pieces providing a plurality of photonic integrated circuit chips 12.

Thus, the mirror layer 86 is directly provided on the back side 24b of the insulator layer 24 which forms the membrane 82 in the membrane windows 78. Furthermore, the coupler grating structures 44 and the optical waveguide structures 56 are directly provided on the front side 24a of the insulator layer 24 which forms the membrane 82 in the membrane windows 78. In other words, the insulator layer 24 forms the membrane 82 in the membrane windows 78 and carries the coupler grating structures 44 and the optical waveguide structures 56 on the front side 24a and the mirror layer 86 on the back side 24b. In the area of the coupler grating structures 44 the produced photonic integrated circuit chip 12 has the following layer sequence from back side to front side:
1. the mirror layer 86,
2. the insulator layer 24 (serving as back side cladding 84) on the front side 86a of the mirror layer 86,
3. the structured semiconductor layer 26 on the front side 24a of the insulator layer 24 and with the optical structures, i.e. the coupler grating structures 44 and the waveguide structures 56, and
4. optionally the passivation layer 66 (serving as front side cladding 68) on the front side 26a of the structured semiconductor layer 26.

Advantageously, the presented fabrication process flow is CMOS compatible, which means:
- The used SOI substrate 10 and materials (deposited layers) are in line with standard CMOS fabrication rules and requirements and no cross contamination of tools and/or other product wafers occur.
- Therefore, this process can be run in almost every chip factory worldwide without disturbing their standard products.
- Therefore, a large number of these optimized integrated waveguides can be supplied to the market in a very cost effective manner.
- Even a non-CMOS compatible mirror 86 material can be chosen, when the step of depositing the mirror 86 material (step 11) is carried out in a physically separated tool. As according to the present invention, the mirror 86 deposition step is the last step in the complete fabrication flow, the device wafers 10 do not return to the CMOS line.

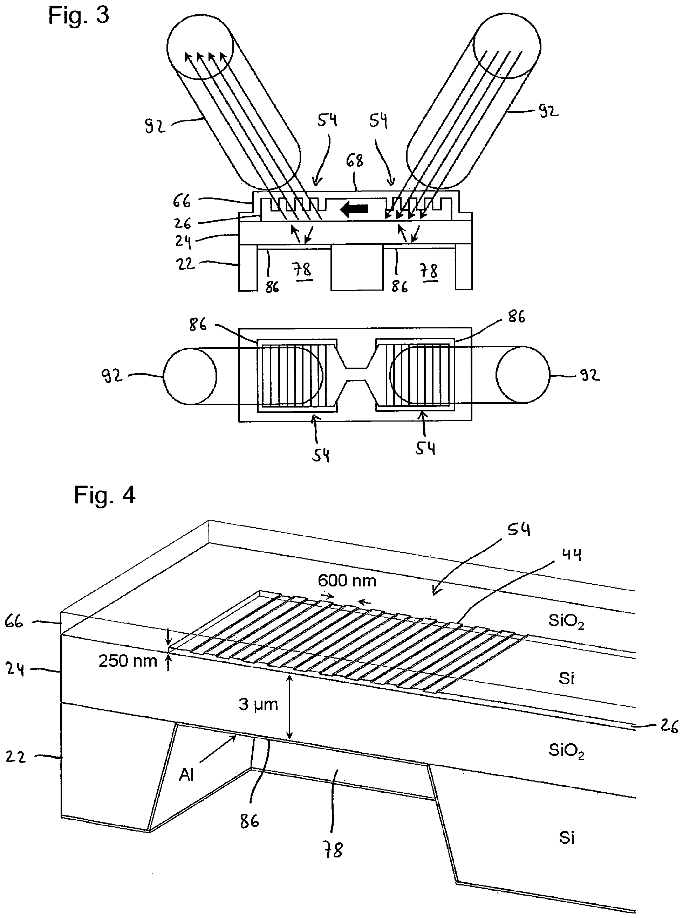

Fig. 3 schematically shows the coupling of a single mode fiber core 92 to the grating coupler 54 at both ends of the integrated waveguide structure 56. It will be appreciated by those skilled in the art that Fig. 3 only shows the core 92 of the optical fiber, because the diameter of the whole optical fiber is typically about 125 *µ*m and thus much larger than the width of the grating coupler having a typical width of about 10 *µ*m.

Fig. 4 illustrates a perspective schematic design of the proposed grating coupler 54.

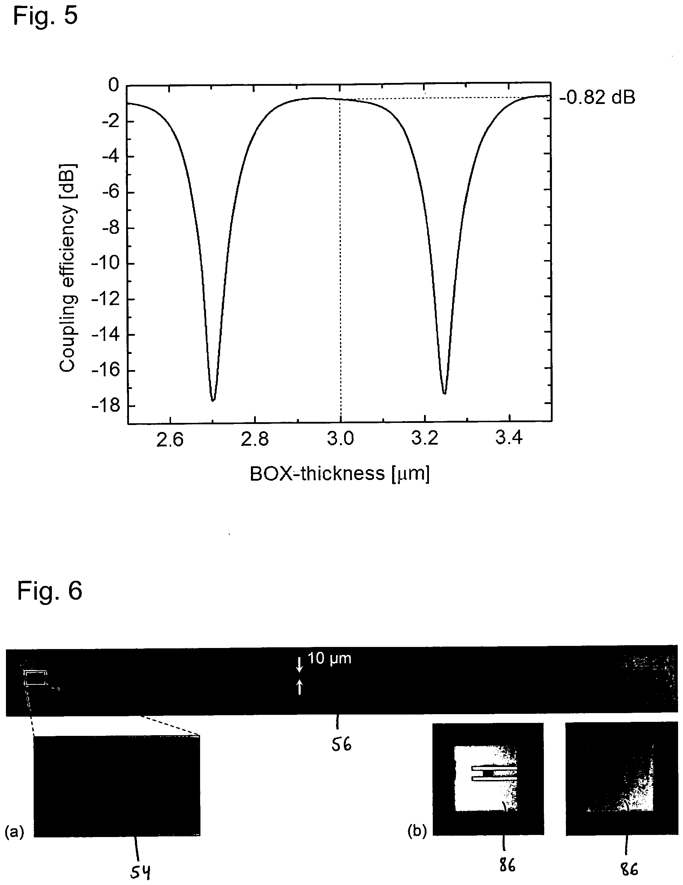

Summarizing, the starting point is a standard SOITEC wafer 10 with a SiO₂ buried oxide layer 24 having a thickness of 3 *µ*m on a silicon wafer substrate 22 (625 *µ*m) and a silicon layer 26 having a thickness of 250 nm on the front side 24a (in Fig. 1a/b, left column and Fig. 4 the front side is represented as upper side). The thickness of the buried oxide layer 24 is important, as it should produce constructive interference between the diffracted field toward the film layer and the field that is reflected at the bottom metal mirror 86 to guarantee a maximum transmission from the optical fiber core 92 to the integrated optical waveguide structure 56 (see Fig. 3). In this example a grating coupler 54 with 18 grating lines, a grating period Λ = 600 nm, a fill factor FF = 0.5, an etch depth of 70 nm and a back side metal mirror 86 is used. With this arrangement, a two-dimensional finite-difference time-domain (FDTD) simulation has been performed. The results are presented in Fig. 5.

Fig. 5 shows that constructive interference occurs using a buried oxide layer 24 thickness of 2.95 *µ*m with -0.76 dB coupling efficiency at a wavelength of 1550 nm for the transversal electric (TE) polarization state. At a value of 3 *µ*m the efficiency is -0.82 dB. A thickness deviation of ± 70 nm from this target value produces additional 0.2 dB losses. Since the behavior is periodic with a difference of a half wavelength between two consecutive peaks, smaller buried oxide layer thicknesses can also be used to achieve the same result.

Fig. 6 shows a picture of the optical structures fabricated according to the present invention having two identical grating couplers 54 serving as input and output power interfaces, linked by an integrated 1 mm long linear waveguide, and having a metal mirror 86 (appearing bright in the figures) on the back side of each of the grating couplers 54.

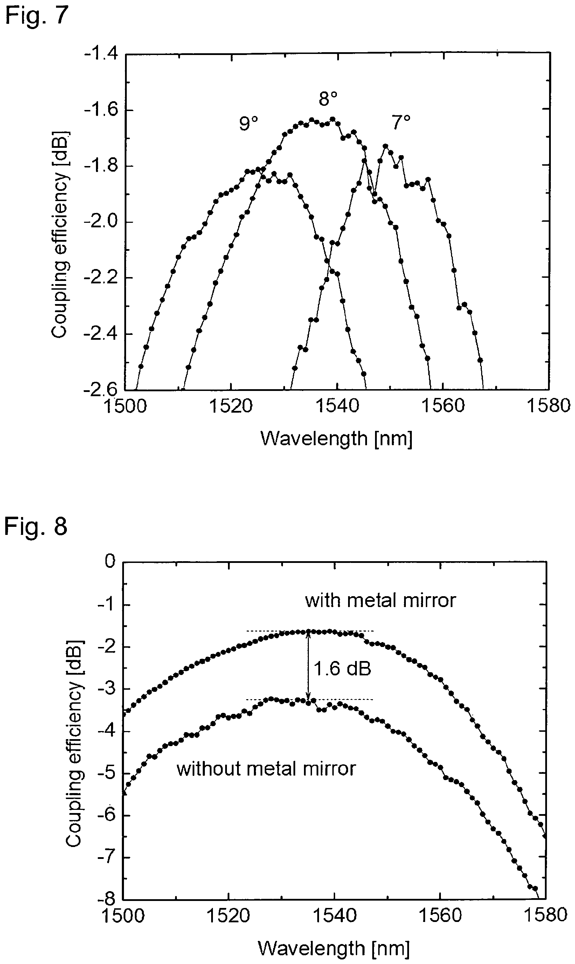

Fig. 7 illustrates the measured coupling efficiency of the grating coupler 54 mentioned above at different fiber core 92 tilt angles over the wavelength. To determine the coupling efficiency of the grating coupler 54 in the conventional optical telecommunication band, a measurement setup composed of a tunable laser source, a polarization controller and an optical power meter have been used. Piezoelectric elements also have been utilized to exactly adjust the fibers at a certain angle on the grating couplers 54. The coupling efficiency in dB is then calculated as η = - (Pᵢₙ - Pout - a_{w} L) / 2, where Pin is the optical input power, Pₒᵤₜ is the measured output power, a_{w} is the waveguide loss per unit length and L is the waveguide 56 length. For simplicity large waveguides 56 with a width of 10 *µ*m have been designed to connect the grating couplers, so that the waveguide loss is small enough (≈ 0.05 dB/mm) to be neglected. When designing the optical structures using single mode waveguides 56 having widths in the order of 500 nm, adequate tapering and larger additional waveguide losses, especially caused by sidewall roughness, have to be taken into consideration. In order to prevent Fresnel reflections between optical fiber cores 92 and grating couplers 54 a standard index matching liquid with a refractive index n of around 1.45 at 1550 nm has been used.

At a fiber core 92 tilt angle of 7° from the gratings surface normal, the coupling efficiency reaches -1.73 dB at 1550 nm, whereas -1.63 dB is obtained at 1540 nm at an angle of 8°. The small discrepancy can be explained by the fluctuation of the thickness of the buried oxide layer 24 over the wafer 10 and some deviation from the designed target values. Nevertheless, the obtained coupling efficiency using the cost-effective CMOS compatible technique according to the invention is comparably good as with the methods described in the introduction. The 1 dB bandwidth is measured to be 48 nm, whereas the 3 dB bandwidth is around 78 nm.

To cross-check the coupling efficiency enhancement of the introduced aluminum mirror 86 on the grating coupler 54 back side, a similar structure has been fabricated as reference sample on the same wafer 10 without mirror 86. In Fig. 8 it can be seen that an amelioration of about 1.6 dB can be achieved due to the increase of the directivity, and hence a better transmission.

Summarizing, a method is presented to provide high efficient grating couplers 54 with a back side metal mirror 86 to enhance the directionality of the structure. The fabrication has been realized in a CMOS line, without need of wafer-to-wafer bonding procedures, thus, simplifying the realization of cost-effective interfaces between single-mode fibers and Si photonic integrated circuits 12. Therewith, grating couplers 54 can be produced that allow high coupling efficiency from standard single mode optical fibers having fiber cores 92 to photonic integrated circuits realized by a simple and cost-effective CMOS compatible technological method. The inventors have designed, fabricated and measured a structure with an efficiency of -1.6 dB near the wavelength of 1550 nm and a 1 dB bandwidth of 48 nm for TE polarization using a standard SOITEC wafer 10 with 3 µm BOX 24 thickness.

It will be appreciated that, the above-described embodiment of the invention has been set forth solely by way of example and illustration of the principles thereof and that further modifications and alterations may be made therein without thereby departing from the scope of the appended claims.

## Claims

1. Method of production of grating couplers (54) for coupling optical fibers to semiconductor photonic integrated circuits on semiconductor-on-insulator chips (12), comprising the steps of:
a) providing a semiconductor-on-insulator wafer (10) comprising a substrate (22), a semiconductor-on-insulator layer (26) forming an optical waveguide layer, and an insulator layer (24) being positioned between the substrate (22) and the semiconductor-on-insulator layer (26), wherein the semiconductor-on-insulator wafer (10) has a front side (10a) and a back side (10b), wherein the semiconductor-on-insulator layer (26) is closer to the front side (10a) and the substrate (22) is closer to the back side (10b),
b) producing coupler grating structures (44) in the semiconductor-on-insulator layer (26),
c) producing integrated optical waveguide structures (56) in the semiconductor-on-insulator layer (26), wherein the integrated optical waveguide structures (56) are optically connected to the coupler grating structures (44) for guiding light between the coupler grating structures (44) and the integrated optical waveguide structures (56),
d) thinning the semiconductor-on-insulator wafer (10) to membrane thickness from the back side (10b) at least in areas opposite to the coupler grating structures (44) such that the back side (24b) of said insulator layer (24) of said semiconductor-on-insulator wafer (10) is exposed by means of etching, with the insulator layer (24) of said semiconductor-on-insulator wafer (10) acting as etch stop, such that this etching process stops when the insulator layer (24) of the semiconductor-on-insulator wafer (10) is reached,
e) depositing a mirror (86) on the back side (24b) of said insulator layer (24) of said semiconductor-on-insulator wafer (10) exposed in step d) from the back side (10b) at least in said areas opposite to the coupler grating structures (44) for enhancing the coupling efficiency between the optical fibers and the grating couplers (54).

2. Method according to claim 1,
wherein the wafer (10) is a silicon-on-insulator wafer, comprising a silicon substrate (22) and wherein said insulator layer (24) is a buried oxide layer on said silicon substrate (22).

3. Method according to one of the preceding claims,
wherein the wafer (10) is a silicon-on-insulator wafer and wherein the insulator layer (24) has a predetermined thickness which is dimensioned to provide constructive interference of the guided light.

4. Method according to one of the preceding claims,
wherein in said step b) the coupler grating structures (44) are defined by a lithographic process and transferred into the semiconductor-on-insulator layer (26) by an etching process which is stopped within said semiconductor-on-insulator layer (24) before reaching the insulator layer (24).

5. Method according to one of the preceding claims,
wherein said step c) is performed in a separate etching step after said step b) and in said step c) the integrated optical waveguide structures (56) are defined by a lithographic process from the front side (10a) of the wafer (10) and transferred into the semiconductor-on-insulator layer (26) by an etching process.

6. Method according to claim 5,
wherein said insulator layer (24) acts as an etch stop when etching said integrated optical waveguide structures (56) from the front side (10a) of said semiconductor-on-insulator wafer (10).

7. Method according to one of the preceding claims,
wherein in a further step c1) after said step c) a passivation layer (66) is deposited on the front side (10a) of said semiconductor-on-insulator wafer (10) thereby covering at least the coupler grating structures (44) produced in said step b) and/or the integrated optical waveguide structures (56) produced in said step c).

8. Method according to one of the preceding claims,
wherein in said step d) the wafer (10) is thinned in localized areas opposite to the coupler grating structures (44) using a structured auxiliary layer (72) having localized openings (76) opposite to the coupler grating structures (44) forming localized membrane windows (78) from the back side (10b) of said semiconductor-on-insulator wafer (10) opposite to the coupler grating structures (44).

9. Method according to claim 8,
wherein in said step d) the insulator layer (24) acts as etch stop when etching said membrane windows (78) from the back side (10b) of said semiconductor-on-insulator wafer (10), such that this etching process stops when said insulator layer (24) is reached.

10. Method according to claims 8 or 9,
wherein in said step e) the mirror (86) is provided in the form of a metal layer, in particular deposited within the membrane windows (78) on the exposed back side (24b) of said insulator layer (24) from the back side (10b) of said semiconductor-on-insulator wafer (10).

11. Semiconductor-on-insulator wafer (10) comprising a substrate (22), a semiconductor-on-insulator layer (26) forming an optical waveguide layer, and an insulator layer (24) being positioned between the substrate (22) and the semiconductor-on-insulator layer (26), wherein the semiconductor-on-insulator wafer (10) has a front side (10a) and a back side (10b), wherein the semiconductor-on-insulator layer (26) is closer to the front side (10a) and the substrate (22) is closer to the back side (10b), wherein a plurality of photonic integrated circuits are provided on said wafer (10), in particular produced by the method according to one of the preceding claims,
wherein each of said photonic integrated circuits comprises:
at least one integrated optical waveguide structure (56) being formed in said semiconductor-on-insulator layer (26),
at least one grating coupler (54) being formed in said semiconductor-on-insulator layer (26) and in optical connection with said integrated optical waveguide structure (56) for coupling an optical fiber to said integrated optical waveguide structure (56),
a back side membrane window (78) opposite to said grating coupler (54), wherein the substrate (22) is removed up to said insulator layer (24) of said semiconductor-on-insulator wafer (10) within said membrane window (78),
a mirror layer (86) deposited from the back side (10b) on said insulator layer (24) of said semiconductor-on-insulator wafer (10) within said membrane window (78) opposite to said grating coupler (54) for enhancing the coupling efficiency between the optical fiber and the grating coupler (54).

12. Semiconductor-on-insulator wafer (10) according to claim 11,
wherein the wafer (10) is a silicon-on-insulator wafer, comprising a silicon substrate (22), wherein said insulator layer (24) is a buried oxide layer on said silicon substrate (22); and
wherein the insulator layer (24) has a predetermined thickness dimensioned to provide constructive interference of the guided light.

13. Semiconductor-on-insulator wafer (10) according to claim 11 or 12,
wherein a passivation layer (66) is provided on the front side of said wafer (10) and covering at least said grating couplers (54) and said integrated optical waveguide structures (56), and/or
wherein said mirror layer (86) is a metal layer.

14. Photonic integrated circuit chip (12) produced from a semiconductor-on-insulator wafer (10), comprising a back side substrate (22), a front side semiconductor-on-insulator layer (26) forming an optical waveguide layer, and an insulator layer (24) being positioned between the substrate (22) and the semiconductor-on-insulator layer (26), said photonic integrated circuit chip (12) comprising:
at least one integrated optical waveguide structure (56) being formed in said semiconductor-on-insulator layer (26),
at least one grating coupler (54) being formed in said semiconductor-on-insulator layer (26) in optical connection with said integrated optical waveguide structure (56) for coupling an optical fiber to said integrated optical waveguide structure (56),
a back side membrane window (78) opposite to said grating coupler (54),
a mirror layer (86) deposited on said insulator layer (24) of said semiconductor-on-insulator wafer (10) from the back side (24b) within said membrane window (78) opposite to said grating coupler (54) for enhancing the coupling efficiency between the optical fiber and the grating coupler (54).

15. Photonic integrated circuit chip (12) according to claim 14,
wherein the front side semiconductor-on-insulator layer (26) forms a high-index optical waveguide layer, and
wherein in the area of the grating coupler (54) the layer sequence from the back side to the front side is:
- the mirror layer (86),
- the insulator layer (24) on the front side (86a) of the mirror layer (86),
- the structured semiconductor layer (26) with coupler grating structures (44) and the waveguide structures (56) and on the front side (24a) of the insulator layer (24), and
- optionally a passivation layer (66) provided on the front side (26a) of the structured semiconductor layer (26).

## Patentansprüche

1. Verfahren zur Herstellung von Gitterkopplern (54) zum Koppeln von optischen Fasern mit photonischen integrierten Halbleiterschaltungen auf Halbleiter-auf-Isolator-Chips (12), welches folgende Schritte umfasst:
a) Bereitstellen eines Halbleiter-auf-Isolator-Wafers (10), der ein Substrat (22), eine Halbleiter-auf-Isolator-Schicht (26), die eine optische Wellenleiterschicht bildet, und eine zwischen dem Substrat (22) und der Halbleiter-auf-Isolator-Schicht (26) angeordnete Isolatorschicht (24) umfasst, wobei der Halbleiter-auf-Isolator-Wafer (10) eine Vorderseite (10a) und eine Rückseite (10b) aufweist, wobei die Halbleiter-auf-Isolator-Schicht (26) näher der Vorderseite (10a) und das Substrat (22) näher der Rückseite (10b) angeordnet ist,
b) Erzeugen von Koppler-Gitterstrukturen (44) in der Halbleiter-auf-Isolator-Schicht (26),
c) Erzeugen von integrierten optischen Wellenleiterstrukturen (56) in der Halbleiter-auf-Isolator-Schicht (26), wobei die integrierten optischen Wellenleiterstrukturen (56) optisch mit den Koppler-Gitterstrukturen (44) verbunden sind, um Licht zwischen den Koppler-Gitterstrukturen (44) und den integrierten optischen Wellenleiterstrukturen (56) zu führen,
d) Abdünnen des Halbleiter-auf-Isolator-Wafers (10) bis zu Membrandicke von der Rückseite (10b) her zumindest in Bereichen, die den Koppler-Gitterstrukturen (44) gegenüberliegen, so dass die Rückseite (24b) der Isolatorschicht (24) des Halbleiter-auf-Isolator-Wafers (10) durch Ätzen freigelegt wird, wobei die Isolatorschicht (24) des Halbleiter-auf-Isolator-Wafers (10) als Ätzstopp wirkt, so dass dieser Ätzprozess stoppt, wenn die Isolatorschicht (24) des Halbleiter-auf-Isolator-Wafers (10) erreicht wird,
e) Abscheiden eines Spiegels (86) auf der Rückseite (24b) der Isolatorschicht (24) des Halbleiter-auf-Isolator-Wafers (10), die in Schritt d) von der Rückseite (10b) her zumindest in den Koppler-Gitterstrukturen (44) gegenüberliegenden Bereichen freigelegt wurde, um die Kopplungseffizienz zwischen den optischen Fasern und den Gitterkopplern (54) zu verbessern.

2. Verfahren nach Anspruch 1,
wobei der Wafer (10) ein Silizium-auf-Isolator-Wafer ist, der ein Siliziumsubstrat (22) umfasst, und wobei die Isolatorschicht (24) eine vergrabene Oxidschicht auf dem Siliziumsubstrat (22) ist.

3. Verfahren nach einem der vorhergehenden Ansprüche,
wobei der Wafer (10) ein Silizium-auf-Isolator-Wafer ist, und wobei die Isolatorschicht (24) eine vorgegebene Dicke aufweist, die so dimensioniert ist, dass sie für konstruktive Interferenz des geführten Lichts sorgt.

4. Verfahren nach einem der vorhergehenden Ansprüche,
wobei in Schritt b) die Koppler-Gitterstrukturen (44) durch einen lithographischen Prozess definiert werden und durch einen Ätzprozess in die Halbleiter-auf-Isolator-Schicht (26) übertragen werden, der in der Halbleiter-auf-Isolator-Schicht (24) gestoppt wird, bevor die Isolatorschicht (24) erreicht ist.

5. Verfahren nach einem der vorhergehenden Ansprüche,
wobei Schritt c) in einem separaten Ätzschritt nach Schritt b) ausgeführt wird, und wobei in Schritt c) die integrierten optischen Wellenleiterstrukturen (56) durch einen lithographischen Prozess von der Vorderseite (10a) des Wafers (10) aus definiert werden und durch einen Ätzprozess in die Halbleiter-auf-Isolator-Schicht (26) übertragen werden.

6. Verfahren nach Anspruch 5,
wobei die Isolatorschicht (24) als Ätzstopp wirkt, wenn die integrierten optischen Wellenleiterstrukturen (56) von der Vorderseite (10a) des Halbleiter-auf-Isolator-Wafers (10) ausgeätzt werden.

7. Verfahren nach einem der vorhergehenden Ansprüche,
wobei in einem weiteren Schritt c1) nach Schritt c) auf der Vorderseite (10a) des Halbleiter-auf-Isolator-Wafers (10) eine Passivierungsschicht (66) abgeschieden wird, wodurch zumindest die in Schritt b) erzeugten Koppler-Gitterstrukturen (44) und/oder die in Schritt c) erzeugten integrierten optischen Wellenleiterstrukturen (56) abgedeckt werden.

8. Verfahren nach einem der vorhergehenden Ansprüche,
wobei der Wafer (10) in Schritt d) in lokalen Bereichen, die den Koppler-Gitterstrukturen (44) gegenüberliegen, abgedünnt wird, unter Verwendung einer strukturierten Hilfsschicht (72) mit lokalen Öffnungen (76) gegenüberliegend den Koppler-Gitterstrukturen (44), wodurch von der Rückseite (10b) des Halbleiter-auf-Isolator-Wafers (10) aus gegenüberliegend den Koppler-Gitterstrukturen (44) lokale Membranfenster (78) ausgebildet werden.

9. Verfahren nach Anspruch 8,
wobei in Schritt d) die Isolatorschicht (24) als Ätzstopp wirkt, wenn die Membranfenster (78) von der Rückseite (10b) des Halbleiter-auf-Isolator-Wafers (10) ausgeätzt werden, so dass dieser Ätzprozess stoppt, wenn die Isolatorschicht (24) erreicht wird.

10. Verfahren nach Anspruch 8 oder 9,
wobei in Schritt e) der Spiegel (86) in Form einer Metallschicht ausgebildet wird, insbesondere in den Membranfenstern (78) auf der freigelegten Rückseite (24b) der Isolatorschicht (24) von der Rückseite (10b) des Halbleiter-auf-Isolator-Wafers (10) aus abgeschieden wird.

11. Halbleiter-auf-Isolator-Wafer (10), der ein Substrat (22), eine Halbleiter-auf-Isolator-Schicht (26), die eine optische Wellenleiterschicht bildet, und eine zwischen dem Substrat (22) und der Halbleiter-auf-Isolator-Schicht (26) angeordnete Isolatorschicht (24) umfasst, wobei der Halbleiter-auf-Isolator-Wafer (10) eine Vorderseite (10a) und eine Rückseite (10b) aufweist, wobei die Halbleiter-auf-Isolator-Schicht (26) näher der Vorderseite (10a) und das Substrat (22) näher der Rückseite (10b) angeordnet ist, wobei auf dem Wafer (10) eine Mehrzahl von photonischen integrierten Schaltungen ausgebildet ist, insbesondere hergestellt durch das Verfahren nach einem der vorhergehenden Ansprüche,
wobei jede der photonischen integrierten Schaltungen umfasst:
mindestens eine integrierte optische Wellenleiterstruktur (56), die in der Halbleiter-auf-Isolator-Schicht (26) ausgebildet ist,
mindestens einen Gitterkoppler (54), der in der Halbleiter-auf-Isolator-Schicht (26) und in optischer Verbindung mit der integrierten optischen Wellenleiterstruktur (56) ausgebildet ist, zum Koppeln einer optischen Faser mit der integrierten optischen Wellenleiterstruktur (56),
ein rückseitiges Membranfenster (78) gegenüberliegend dem Gitterkoppler (54), wobei das Substrat (22) in dem Membranfenster (78) bis zu der Isolatorschicht (24) des Halbleiter-auf-Isolator-Wafers (10) entfernt ist,
eine Spiegelschicht (86), die von der Rückseite (10b) her auf der Isolatorschicht (24) des Halbleiter-auf-Isolator-Wafers (10) in dem Membranfenster (78) gegenüberliegend dem Gitterkoppler (54) abgeschieden ist, um die Kopplungseffizienz zwischen der optischen Faser und dem Gitterkoppler (54) zu verbessern.

12. Halbleiter-auf-Isolator-Wafer (10) nach Anspruch 11,
wobei der Wafer (10) ein Silizium-auf-Isolator-Wafer ist, der ein Siliziumsubstrat (22) umfasst, wobei die Isolatorschicht (24) eine vergrabene Oxidschicht auf dem Siliziumsubstrat (22) ist, und
wobei die Isolatorschicht (24) eine vorgegebene Dicke aufweist, die so dimensioniert ist, dass sie für konstruktive Interferenz des geführten Lichts sorgt.

13. Halbleiter-auf-Isolator-Wafer (10) nach Anspruch 11 oder 12,
wobei auf der Vorderseite des Wafers (10) eine Passivierungsschicht (66) ausgebildet ist und zumindest die Gitterkoppler (54) und die integrierten optischen Wellenleiterstrukturen (56) abdeckt, und/oder
wobei die Spiegelschicht (86) eine Metallschicht ist.

14. Photonischer integrierter Schaltungschip (12), hergestellt aus einem Halbleiter-auf-Isolator-Wafer (10), der ein rückseitiges Substrat (22), eine vorderseitige Halbleiter-auf-Isolator-Schicht (26), die eine optische Wellenleiterschicht bildet, und eine zwischen dem Substrat (22) und der Halbleiter-auf-Isolator-Schicht (26) angeordnete Isolatorschicht (24) umfasst, wobei der photonische integrierte Schaltungschip (12) umfasst:
mindestens eine integrierte optische Wellenleiterstruktur (56), die in der Halbleiter-auf-Isolator-Schicht (26) ausgebildet ist,
mindestens einen Gitterkoppler (54), der in der Halbleiter-auf-Isolator-Schicht (26) in optischer Verbindung mit der integrierten optischen Wellenleiterstruktur (56) ausgebildet ist, zum Koppeln einer optischen Faser mit der integrierten optischen Wellenleiterstruktur (56),
ein rückseitiges Membranfenster (78) gegenüberliegend dem Gitterkoppler (54),
eine Spiegelschicht (86), die von der Rückseite (10b) aus auf der Isolatorschicht (24) des Halbleiter-auf-Isolator-Wafers (10) in dem Membranfenster (78) gegenüberliegend dem Gitterkoppler (54) abgeschieden ist, um die Kopplungseffizienz zwischen der optischen Faser und dem Gitterkoppler (54) zu verbessern.

15. Photonischer integrierter Schaltungschip (12) nach Anspruch 14,
wobei die vorderseitige Halbleiter-auf-Isolator-Schicht (26) eine hochbrechende optische Wellenleiterschicht bildet, und
wobei in dem Bereich des Gitterkopplers (54) die Schichtabfolge von der Rückseite zur Vorderseite hin umfasst:
- die Spiegelschicht (86),
- die Isolatorschicht (24) auf der Vorderseite (86a) der Spiegelschicht (86),
- die strukturierte Halbleiterschicht (26) mit Koppler-Gitterstrukturen (44) und den Wellenleiterstrukturen (56) auf der Vorderseite (24a) der Isolatorschicht (24), und
- optional eine auf der Vorderseite (26a) der strukturierten Halbleiterschicht (26) vorgesehene Passivierungsschicht (66).

## Revendications

1. Procédé de réalisation de coupleurs à réseau (54) pour le couplage de fibres optiques à des circuits intégrés photoniques à semi-conducteur sur des puces à semi-conducteur-sur-isolant (12), comprenant les étapes suivantes:
a) mise à disposition d'une tranche à semi-conducteur-sur-isolant (10) comportant un substrat (22), une couche semi-conductrice-sur-isolant (26), formant une couche de guide-ondes optique, et une couche d'isolant (24) placée entre le substrat (22) et la couche semi-conductrice-sur-isolant (26), où la tranche à semi-conducteur-sur-isolant (10) présente une face avant (10a) et une face arrière (10b), la couche semi-conductrice-sur-isolant (26) étant plus proche de la face avant (10a) et le substrat (22) étant plus proche de la face arrière (10b),
b) réalisation de structures de réseaux de coupleurs (44) dans la couche semi-conductrice-sur-isolant (26),
c) réalisation de structures de guides d'ondes optiques intégrés (56) dans la couche semi-conductrice-sur-isolant (26), où les structures de guides d'ondes optiques intégrés (56) sont connectées optiquement aux structures de réseaux de coupleurs (44) pour guider la lumière entre les structures de réseaux de coupleurs (44) et les structures de guides d'ondes optiques intégrés (56),
d) amincissement de la tranche à semi-conducteur-sur-isolant (10) jusqu'à une épaisseur de membrane à partir de la face arrière (10b), au moins dans des zones opposées aux structures de réseaux de coupleurs (44), de manière à ce que la face arrière (24b) de ladite couche d'isolant (24) de ladite tranche à semi-conducteur-sur-isolant (10) soit exposée par gravure, la couche d'isolant (24) de ladite tranche à semi-conducteur-sur-isolant (10) agissant comme arrêt de gravure, de manière à ce que ce processus de gravure s'arrête lorsque la couche d'isolant (24) de la tranche à semi-conducteur-sur-isolant (10) est atteinte,
e) dépôt d'un miroir (86) sur la face arrière (24b) de ladite couche d'isolant (24) de ladite tranche à semi-conducteur-sur-isolant (10) exposée à l'étape d) depuis la face arrière (10), au moins dans lesdites zones opposées aux structures de réseaux de coupleurs (44) pour augmenter l'efficacité de couplage entre les fibres optiques et les coupleurs à réseau (54).

2. Procédé selon la revendication 1, selon lequel la tranche (10) est une tranche à silicium-sur-isolant comprenant un substrat de silicium (22), et selon lequel ladite couche d'isolant (24) est une couche d'oxyde enterré sur ledit substrat de silicium (22).

3. Procédé selon l'une des revendications précédentes, selon lequel la tranche (10) est une tranche de silicium-sur-isolant et selon lequel la couche d'isolant (24) présente une épaisseur prédéterminée qui est dimensionnée pour produire une interférence constructrice de la lumière guidée.

4. Procédé selon l'une des revendications précédentes, selon lequel, à ladite étape b), les structures de réseaux de coupleurs (44) sont définies par un procédé lithographique et transférées dans la couche semi-conductrice-sur-isolant (26) par un procédé de gravure qui est arrêté dans ladite couche semi-conductrice-sur-isolant (26) avant d'atteindre la couche d'isolant (24).

5. Procédé selon l'une des revendications précédentes, selon lequel ladite étape c) est exécutée en une étape de gravure séparée, succédant à ladite étape b), et à ladite étape c), les structures de guides d'ondes optiques intégrés (56) sont définies par un procédé lithographique à partir de la face avant (10a) de la tranche (10) et transférées dans ladite couche semi-conductrice-sur-isolant (26) par un procédé de gravure.

6. Procédé selon la revendication 5, selon lequel ladite couche d'isolant (24) agit comme un arrêt de gravure lors de la gravure desdites structures de guides d'ondes optiques intégrés (56) à partir de la face avant (10a) de ladite tranche à semi-conducteur-sur-isolant (10)

7. Procédé selon l'une des revendications précédentes, selon lequel, lors d'une étape supplémentaire c1) succédant à l'étape c), une couche de passivation (66) est déposée sur la face avant (10a) de ladite tranche à semi-conducteur-sur-isolant (10), recouvrant ainsi au moins les structures de réseaux de coupleurs (44) produites lors de ladite étape b) et/ou les structures de guides d'ondes optiques intégrés (56) produites à l'étape c).

8. Procédé selon l'une des revendications précédentes, selon lequel, à ladite étape d), la tranche (10) est amincie dans des zones localisées opposées aux structures de réseaux de coupleurs (44), en utilisant une couche auxiliaire structurée (72) présentant des ouvertures (76) localisées, opposées aux structures de réseaux de coupleurs (44) formant des fenêtres de membrane (78) localisées depuis la face arrière (10b) de ladite tranche à semi-conducteur-sur-isolant (10) opposée aux structures de réseaux de coupleurs (44).

9. Procédé selon la revendication 8, selon lequel, à ladite étape d), la couche d'isolant (24) agit comme arrêt de gravure lors de la gravure desdites fenêtres de membrane (78) depuis la face arrière (10b) de ladite tranche à semi-conducteur-sur-isolant (10), de manière à ce que ce processus de gravure s'arrête lorsque ladite couche d'isolant (24) est atteinte.

10. Procédé selon les revendications 8 ou 9, selon lequel, à ladite étape e) le miroir (86) est réalisé sous la forme d'une couche métallique, en particulier déposé dans les fenêtres de membrane (78) sur la face arrière (24b) exposée de ladite couche d'isolant (24) depuis la face arrière (10b) de ladite tranche à semi-conducteur-sur-isolant (10).

11. Tranche à semi-conducteur-sur-isolant (10) comportant un substrat (22), une couche semi-conductrice-sur-isolant (26), formant une couche de guide-ondes optique, et une couche d'isolant (24) placée entre le substrat (22) et la couche semi-conductrice-sur-isolant (26), où la tranche à semi-conducteur-sur-isolant (10) présente une face avant (10a) et une face arrière (10b), la couche semi-conductrice-sur-isolant (26) étant plus proche de la face avant (10a) et le substrat (22) étant plus proche de la face arrière (10b), où une pluralité de circuits intégrés photoniques sont prévus sur ladite tranche (10), en particulier réalisés par le procédé conforme à l'une des revendications précédentes,
où chacun desdits circuits intégrés photoniques comprend:
au moins une structure de guide d'ondes optique intégré (56) formée dans ladite couche semi-conductrice-sur-isolant (26),
au moins un coupleur à réseau (54) formé dans ladite couche semi-conductrice-sur-isolant (26) et en connexion optique avec ladite structure de guide d'ondes optique intégré (56) pour le couplage d'une fibre optique à ladite structure de guide d'ondes optique intégré (56),
une fenêtre de membrane de face arrière (78), opposée audit coupleur à réseau (54), où le substrat (22) est retiré jusqu'à ladite couche d'isolant (24) de ladite tranche à semi-conducteur-sur-isolant (10) dans ladite fenêtre de membrane (78),
une couche de miroir (86) déposée depuis la face arrière (10b) sur ladite couche d'isolant (24) de ladite tranche à semi-conducteur-sur-isolant (10) dans ladite fenêtre de membrane (78) opposée audit coupleur à réseau (54) pour augmenter le rendement de couplage entre la fibre optique et le coupleur à réseau (54).

12. Tranche à semi-conducteur-sur-isolant (10) selon la revendication 11,
dans laquelle la tranche (10) est une tranche de silicium-sur-isolant, comportant un substrat de silicium (22), où ladite couche d'isolant (24) est une couche d'oxyde enterré sur ledit substrat de silicium (22) ; et
dans laquelle la couche d'isolant (24) présente une épaisseur prédéterminée dimensionnée pour produire une interférence constructive de la lumière guidée.

13. Tranche à semi-conducteur-sur-isolant (10) selon la revendication 11 ou 12,
dans laquelle une couche de passivation (66) est prévue sur la face avant de ladite tranche (10) et recouvre au moins lesdits coupleurs à réseau (54) et lesdites structures de guides d'ondes optiques intégrés (56), et/ou
dans laquelle ladite couche de miroir (86) est une couche métallique.

14. Puce à circuit intégré photonique (12) produite à partir d'une tranche à semi-conducteur-sur-isolant (10), comportant un substrat de face arrière (22), une couche semi-conductrice-sur-isolant de face avant (26), formant une couche de guide d'ondes optique, et une couche d'isolant (24) placée entre le substrat (22) et la couche semi-conductrice-sur-isolant (26), ladite puce à circuit intégré photonique (12) comprenant :
au moins une structure de guide d'ondes optique intégré (56) formée dans ladite couche semi-conductrice-sur-isolant (26),
au moins un coupleur à réseau (54) formé dans ladite couche semi-conductrice-sur-isolant (26) en connexion optique avec ladite structure de guide d'ondes optique intégré (56) pour coupler une fibre optique à ladite structure de guide d'ondes optique intégré (56),
une fenêtre de membrane de face arrière (78) opposée audit coupleur à réseau (54),
une couche de miroir (86) déposée sur ladite couche d'isolant (24) de ladite tranche à semi-conducteur-sur-isolant (10) depuis la face arrière (24b) dans ladite fenêtre de membrane (78) opposée audit coupleur à réseau (54) pour augmenter le rendement de couplage entre la fibre optique et le coupleur à réseau (54).

15. Puce à circuit intégré photonique (12) selon la revendication 14,
dans laquelle la couche semi-conductrice-sur-isolant de face avant (26) forme une couche de guide d'ondes optique à indice élevé, et
dans laquelle, dans la zone du coupleur à réseau (54), la suite de couches de la face arrière à la face avant est la suivante:
- la couche de miroir (86),
- la couche d'isolant (24) sur la face avant (86a) de la couche de miroir (86),
- la couche semi-conductrice structurée (26) avec des structures de réseaux de coupleurs (44) et les structures de guide d'onde (56) et sur la face avant (24a) de la couche d'isolant (24), et
- de manière facultative une couche de passivation (66) réalisée sur la face avant (26a) de la couche semi-conductrice structurée (26).
